# FASCICULE DE BREVET EUROPEEN

(11) **EP 2 302 822 B1**
(45) Date de publication et mention de la délivrance du brevet: **04.04.2012**
(21) Numéro de dépôt: 10179113.5
(22) Date de dépôt: 24.09.2010
(51) Int. Cl.: H04B 7/185

(54) **Système de télécommunications par satellite multifaisceaux et procédé de formation de faisceaux**
Telekommunikationsanordnung mit einem Satelliten mit einer Mehrstrahlantenna und Verfahren zum Strahlenaufbau
Telecommunication system with a multibeam satellite and method of beams formation

(30) Priorité: 28.09.2009 FR 0956709
(43) Date de publication de la demande: 30.03.2011
(73) Titulaire: Astrium SAS, 75016 Paris (FR)
(72) Inventeur: Tronc, Jérôme, 31240, Saint Jean (FR); Bouscary, Laurent, 31570, Sainte Foy d'Aigrefeuille (FR)
(74) Mandataire: Fourcade, Emmanuelle

(56) Documents cités:
- EP-A2- 0 860 952
- FR-A1- 2 928 510
- GB-A- 2 318 947
- US-A1- 2008 001 812
- US-A1- 2008 051 080

## Description

La présente invention appartient au domaine des télécommunications par satellite. Plus particulièrement, la présente invention concerne un satellite multifaisceaux, un système de télécommunications par satellite multifaisceaux, ainsi qu'un procédé de formation de faisceaux.

La présente invention s'applique tout particulièrement aux systèmes spatiaux de télécommunications civiles mettant en oeuvre des satellites, en orbite terrestre, pour relayer des données entre des terminaux terrestres et au moins une station sol.

Dans un tel système, un satellite échange des données sur au moins deux liaisons radiofréquences : une première liaison avec les terminaux terrestres, dite « liaison utilisateurs », et une seconde liaison avec la station sol, dite « liaison de connexion ».

On s'intéresse plus particulièrement aux satellites multifaisceaux comportant un réseau d'antennes. On entend ici par « réseau d'antennes » un réseau d'éléments rayonnants adaptés à la formation de faisceaux.

Un faisceau correspond à un diagramme du rayonnement radiofréquence particulier du satellite, permettant de desservir une zone géographique particulière à la surface de la Terre. Un satellite multifaisceaux est adapté à former une pluralité de tels faisceaux, et par conséquent à desservir simultanément une pluralité de zones géographiques différentes.

Le plus souvent, des sous-bandes d'une bande de radiofréquences sont attribuées aux zones géographiques d'après un motif de répétition, dans lequel des sous-bandes différentes sont utilisées par des faisceaux de zones géographiques adjacentes, afin de limiter des interférences co-fréquences entre lesdites zones géographiques.

Pour former un faisceau sur la liaison utilisateurs à partir d'un signal donné, dans un sens descendant de ladite liaison utilisateurs, on émet généralement sur chaque antenne du réseau une version du signal, pondérée par un coefficient de pondération en phase et en amplitude spécifique à chaque antenne d'émission et au faisceau à former.

Dans un sens montant de la liaison utilisateurs, un faisceau est formé en combinant des signaux reçus sur chaque antenne du réseau, pondérés par lesdits coefficients de pondération.

Les coefficients de pondération sont déterminés pour assurer la formation d'un diagramme de rayonnement donné, et sont généralement calculés au sol.

En effet, les capacités de calcul des processeurs embarqués dans les satellites multifaisceaux sont actuellement fortement limitées par des contraintes de masse, de puissance électrique consommée et de dissipation thermique, et il s'avère en général plus pénalisant d'ajouter le calcul des coefficients de pondération aux tâches effectuées par lesdits processeurs, que de les faire calculer par une station sol.

Deux approches principales sont connues et mises en oeuvre dans les satellites multifaisceaux actuels : une première approche, dite de « formation de faisceaux à bord » (OBBF, de l'anglais « On-Board Beam Forming ») et une seconde approche, dite de « formation de faisceaux au sol » (GBBF, de l'anglais « Ground-Based Beam Forming »).

Dans le cas d'une formation de faisceaux à bord, les coefficients de pondération sont appliqués par le satellite. Les coefficients de pondération ont généralement été préalablement calculés par une station sol.

Les faisceaux ainsi obtenus visent essentiellement à desservir des zones géographiques prédéfinies, dont le découpage varie peu dans le temps, du fait que toute mise à jour des coefficients nécessite une reconfiguration du processeur pouvant parfois durer plusieurs minutes.

Dans le cas d'une formation de faisceaux au sol, les coefficients de pondération sont appliqués au niveau de la (ou des) station(s) sol, c'est-à-dire que la station sol transmet les versions pondérées des signaux qui sont émises sur chaque antenne du réseau du satellite (pour une formation de faisceaux dans le sens descendant de la liaison utilisateurs), ou ledit satellite émet vers ladite station sol les signaux reçus sur chacune des antennes du réseau (pour une formation de faisceaux dans le sens montant de la liaison utilisateurs) pour qu'ils y soient combinés linéairement.

Les coefficients de pondération étant appliqués au sol, au moyen de processeurs dont les performances sont moins limitées que celles des processeurs embarqués dans les satellites, les faisceaux formés peuvent l'être de façon dynamique et des algorithmes de traitement du signal avancés peuvent être mis en oeuvre.

Toutefois, la bande passante nécessaire sur la liaison de connexion est beaucoup plus importante que dans le cas d'une formation de faisceaux à bord, du fait que les signaux à émettre ou reçus sur chacune des antennes du réseau doivent être échangés sur la liaison intermédiaire. Si le réseau du satellite comporte un nombre NE d'antennes, la bande passante nécessaire sur la liaison de connexion sera jusqu'à NE fois supérieure à celle nécessaire pour la formation de faisceaux à bord.

Voir GB-A-2 318 947 (Motorola).

La présente invention vise à fournir une solution de formation de faisceaux pour satellites de télécommunications qui puisse être mise en oeuvre par les processeurs actuellement embarqués dans de tels satellites, tout en autorisant la formation de faisceaux dynamiques et/ou plus complexes, visant notamment à annuler les interférences entre utilisateurs dans le sens montant ou descendant de la liaison utilisateurs.

Selon un premier aspect, la présente invention concerne un dispositif destiné à être embarqué dans un satellite de télécommunications multifaisceaux adapté à relayer des données entre des terminaux terrestres et au moins une station sol. Le dispositif comporte un module de formation de faisceaux à bord du satellite, un module de traitement de faisceaux formés au sol par la station sol, et un module de routage des signaux reçus de la station sol et/ou de terminaux terrestres, des signaux de faisceaux formés à bord étant routés vers le module de formation de faisceaux à bord, et des signaux de faisceaux formés au sol étant routés vers le module de traitement de faisceaux formés au sol.

De préférence, le dispositif comporte, pour la formation de faisceaux dans le sens descendant de la liaison utilisateurs, un module de combinaison des signaux de faisceaux formés à bord et des signaux de faisceaux formés au sol.

Selon un second aspect, la présente invention concerne un satellite comportant un dispositif selon l'invention. De préférence, le satellite comporte un réseau d'antennes pour échanger des données sur la liaison utilisateurs, utilisé à la fois pour les faisceaux formés à bord et pour les faisceaux formés au sol.

Selon un troisième aspect, la présente invention concerne un centre de gestion de système de télécommunications par satellite multifaisceaux, système dans lequel des données sont échangées entre des terminaux terrestres et au moins une station sol par l'intermédiaire d'au moins un satellite multifaisceaux, les données étant échangées sur une liaison utilisateurs entre le satellite et des terminaux terrestres en formant des faisceaux dans un sens descendant et/ou un sens montant de ladite liaison utilisateurs. Le centre de gestion comporte des moyens de répartir les faisceaux à former parmi deux groupes de faisceaux : un groupe de faisceaux formés au sol par la station sol et un groupe de faisceaux formés à bord du satellite.

De préférence, les moyens de répartir les faisceaux sont configurés pour répartir les faisceaux à former parmi les deux groupes de faisceaux en fonction d'un contexte utilisateurs des terminaux terrestres.

De préférence, les moyens de répartir les faisceaux sont configurés pour répartir les faisceaux en fonction d'un critère de mobilité et/ou de débit de données et/ou de localisation et/ou de caractéristiques radiofréquences d'un terminal terrestre ou d'un groupe de terminaux terrestres pour lequel un faisceau doit être formé.

De préférence, le centre de gestion comporte des moyens de coordonner la coexistence des faisceaux formés à bord et des faisceaux formés au sol.

Selon un quatrième aspect, la présente invention concerne un système de télécommunications comportant au moins un satellite multifaisceaux selon l'invention, au moins une station sol comportant un module de formation de faisceaux au sol, et un centre de gestion selon l'invention.

De préférence, la station sol du système de télécommunications comporte un module de traitement de faisceaux formés à bord du satellite et un module de routage des signaux à destination et/ou reçus du satellite, des signaux de faisceaux formés à bord du satellite étant routés vers le module de traitement de faisceaux formés à bord, et des signaux de faisceaux formés au sol étant routés vers le module de formation de faisceaux au sol.

Selon un cinquième aspect, la présente invention concerne un procédé de formation de faisceaux sur une liaison utilisateurs entre un satellite multifaisceaux et des terminaux terrestres, des données étant échangées par l'intermédiaire du satellite entre lesdits terminaux terrestres et au moins une station sol. Le procédé de formation de faisceaux comporte une étape de répartition des faisceaux à former parmi deux groupes de faisceaux, un groupe de faisceaux formés à bord du satellite et un groupe de faisceaux formés au sol par la station sol, une étape de formation à bord des faisceaux du groupe de faisceaux formés à bord du satellite, et une étape de formation au sol des faisceaux du groupe de faisceaux formés par la station sol.

De préférence, les faisceaux à former sont répartis parmi les deux groupes de faisceaux en fonction d'un contexte utilisateurs des terminaux terrestres.

De préférence, les faisceaux formés à bord du satellite sont des faisceaux statiques ou semi-statiques, et les faisceaux formés au sol sont des faisceaux dynamiques.

De préférence, on répartit les faisceaux en fonction d'un critère de mobilité et/ou de débit de données et/ou de localisation et/ou de caractéristiques radiofréquences d'un terminal terrestre ou d'un groupe de terminaux terrestres pour lequel un faisceau doit être formé.

De préférence, tous les faisceaux sont formés à bord lorsqu'une liaison de connexion, entre le satellite et la station sol, présente des perturbations importantes.

La description suivante de l'invention est faite en se référant aux figures, dans lesquelles des références identiques désignent des éléments identiques ou analogues, qui représentent de manière non limitative :
- Figure 1 : une représentation schématique d'un système de télécommunications par satellite multifaisceaux selon l'invention,
- Figures 2a et 2b : des représentations schématiques d'un satellite selon l'invention, pour une formation de faisceaux dans le sens respectivement descendant et montant de la liaison utilisateurs,
- Figure 3: une représentation schématique d'un exemple d'architecture d'un dispositif, embarqué dans le satellite, de formation de faisceaux,
- Figures 4a et 4b : des représentations schématiques d'une station sol selon l'invention, pour une formation de faisceaux dans le sens respectivement descendant et montant de la liaison utilisateurs.

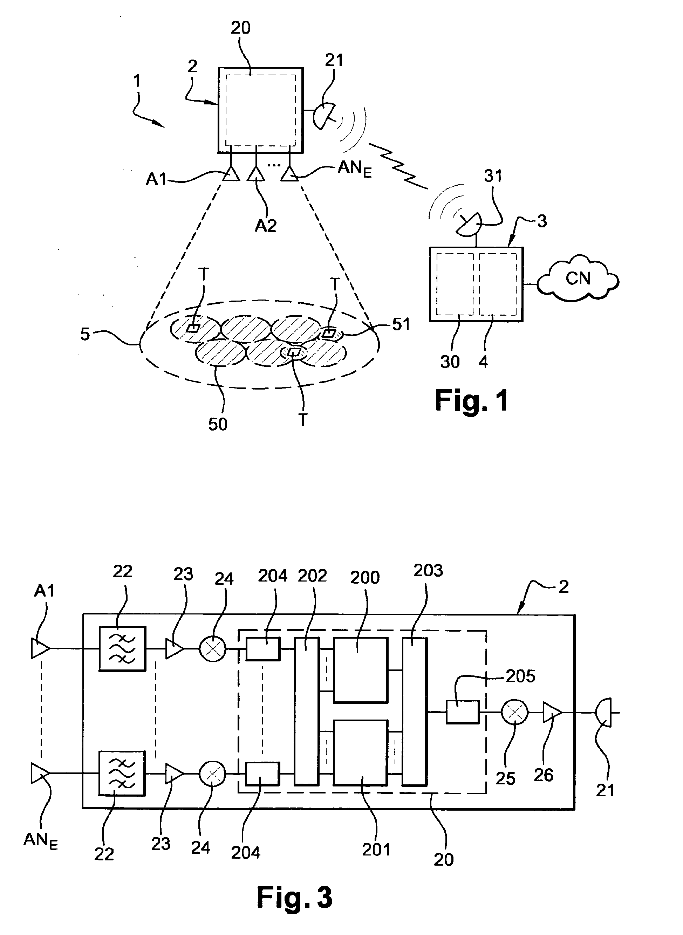

Dans un système 1 de télécommunications par satellite selon l'invention, représenté schématiquement sur la figure 1, des données sont échangées entre des terminaux terrestres T et au moins une station sol 3 reliée à un coeur de réseau satellite (désigné « CN »), par l'intermédiaire d'au moins un satellite 2 multifaisceaux, en orbite terrestre.

Le satellite 2 comporte un réseau de NE antennes An, 1 ≤ n ≤ N_{E}, pour échanger les données avec les terminaux terrestres.

Le système 1 de télécommunications est adapté, par l'intermédiaire du satellite 2 multifaisceaux, à desservir, de préférence simultanément, des zones géographiques différentes, en formant des faisceaux différents. De tels faisceaux sont formés soit dans le sens montant, soit dans le sens descendant de la liaison utilisateurs entre les terminaux terrestres T et le satellite 2. De préférence, des faisceaux sont formés à la fois dans les sens montant et descendant de ladite liaison utilisateurs.

Dans le contexte de l'invention, un terminal terrestre est mobile ou immobile, et peut être situé n'importe où dans une zone de couverture 5 de la liaison utilisateurs, y compris aéroporté dans un aéronef (avion, hélicoptère, etc.). Un terminal terrestre peut également être une station relais permettant de relayer des données reçues du satellite 2 vers une pluralité d'autres terminaux terrestres.

Le satellite 2 peut être placé sur tout type d'orbite, par exemple sur une orbite basse (orbite LEO, de l'anglais « Low Earth Orbit »), une orbite moyenne (orbite MEO, de l'anglais « Medium Earth Orbit ») ou, de préférence, une orbite haute telle que l'orbite géostationnaire (orbite GEO, de l'anglais « Geostationary Earth Orbit »).

Le réseau d'antennes An du satellite 2 est, suivant des exemples non limitatifs, un réseau d'antennes à rayonnement direct (« Direct Radiating Antenna » dans la littérature anglo-saxonne) ou un réseau d'antennes à rayonnement indirect par réflecteur (« Array Fed Reflector » dans la littérature anglo-saxonne).

La liaison utilisateurs, entre les terminaux terrestres T et le satellite 2, et la liaison de connexion, entre le satellite 2 et la station sol 3, sont des liaisons radiofréquences. Chacune des liaisons, utilisateurs ou de connexion, est de préférence bidirectionnelle, c'est-à-dire que des données peuvent être échangées à la fois dans un sens montant vers le satellite 2 et dans un sens descendant depuis ledit satellite. Sur les liaisons utilisateurs et de connexion, des informations de contrôle, visant à configurer l'échange de données sur lesdites liaisons, peuvent également être échangées.

Les liaisons utilisateurs et de connexion peuvent utiliser des bandes de radiofréquences différentes. De plus, des bandes de radiofréquences différentes peuvent être utilisées sur le sens montant et sur le sens descendant desdites liaison utilisateurs et de connexion.

Il est à noter que l'invention n'est pas limitée à un type de bande de radiofréquences particulier, et qu'un choix particulier de bande de radiofréquences ne constitue qu'une variante possible d'implémentation. On peut citer, à titre d'exemples non limitatifs, les bandes Ka, Ku, L, etc.

Pour les besoins de la description des modes de réalisation de l'invention, on considère de manière non limitative que les bandes de radiofréquences sont découpées en sous-bandes, qui sont attribuées à des faisceaux différents.

C'est de préférence le cas si des données de terminaux terrestres d'une même zone géographique sont multiplexées dans le temps sur une même sous-bande, ou si lesdites données sont multiplexées au moyen de codes d'étalement orthogonaux ou pseudo-orthogonaux.

Suivant d'autres exemples, on peut avoir, au sein d'un même faisceau, une pluralité de sous-bandes. C'est par exemple le cas lorsque des données de terminaux terrestres différents, dans la zone géographique desservie, sont multiplexées en fréquence.

Dans le contexte de l'invention, un « signal » correspond aux données d'un terminal terrestre ou d'un groupe de terminaux terrestres après leur mise en forme en mettant en oeuvre des procédés qui sortent du cadre de l'invention (codage de canal, modulation, etc.). Un tel signal est indifféremment un signal en bande de base, un signal sur fréquence intermédiaire ou dans la sous-bande associée au faisceau formé.

Le satellite 2 comporte, outre le réseau d'antennes An, un dispositif embarqué de traitement de faisceaux, dit « dispositif de traitement bord » 20.

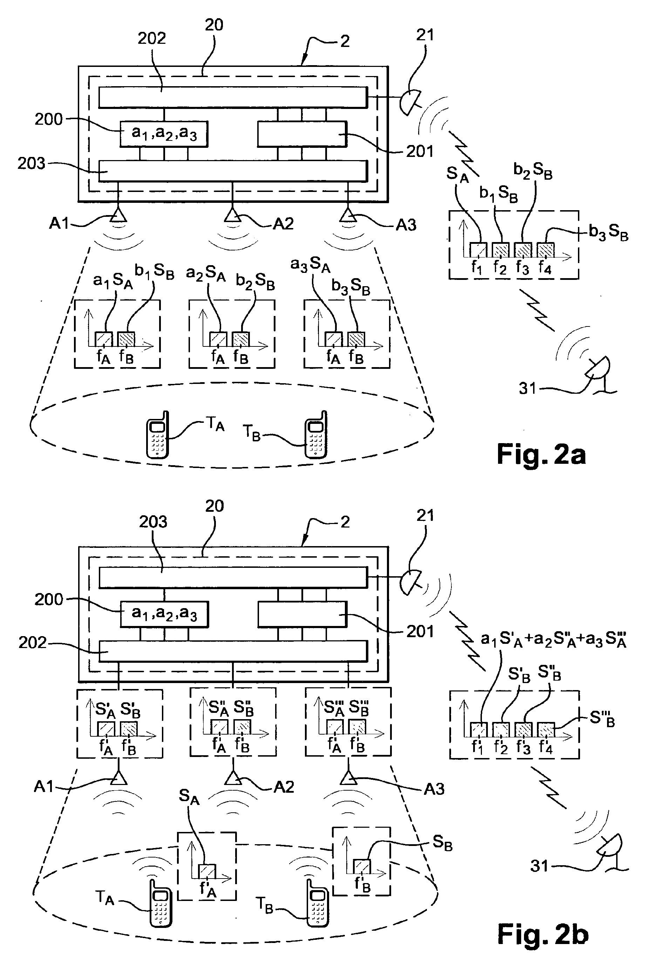

Dans un mode préféré de réalisation du dispositif de traitement bord 20, visible sur les figures 2a et 2b, il comporte :
- un module de formation de faisceaux à bord 200, qui exécute les fonctions embarquées de formation de faisceaux à bord, en particulier celle d'appliquer les coefficients de pondération,
- un module de traitement de faisceaux formés au sol 201, qui a pour fonction principale de relayer les signaux de faisceaux formés au sol entre la station sol 3 et le réseau d'antennes An,
- un module de routage 202 des signaux reçus de la station sol et/ou de terminaux terrestres, des signaux de faisceaux formés à bord étant routés vers le module de formation de faisceaux à bord, et des signaux de faisceaux formés au sol étant routés vers le module de traitement de faisceaux formés au sol.

Ainsi, le satellite 2 multifaisceaux supporte à la fois la formation de faisceaux à bord, de préférence pour la formation de faisceaux statiques desservant des zones géographiques dont le découpage varie peu au cours du temps, et la formation de faisceaux par la station sol 3, de préférence pour la formation de faisceaux dynamiques pouvant mettre en oeuvre des algorithmes de traitement du signal avancés.

Dans un mode particulier de réalisation, un même réseau d'antennes An, et de préférence les étages radiofréquences associés, est utilisé pour les faisceaux formés à bord et pour les faisceaux formés au sol, dans le sens montant et/ou descendant. Ce mode est avantageux du fait que les ressources matérielles (et les opérations de calibration associées) à introduire pour supporter à la fois une formation de faisceaux à bord et une formation de faisceaux au sol sont limitées par la mise en commun de certaines ressources matérielles.

Dans le cas, considéré dans la suite de l'exposé, où un même réseau d'antennes An est utilisé pour les faisceaux formés à bord et les faisceaux formés au sol, le dispositif de traitement bord 20 comporte en outre un module de combinaison 203, sur le sens descendant de la liaison utilisateurs et sur chaque antenne du réseau, des signaux de faisceaux formés à bord et des signaux de faisceaux formés au sol.

Pour échanger des données avec la station sol 3, le satellite 2 comporte au moins une antenne, dite antenne de connexion 21. Comme pour le réseau d'antennes An, de préférence la même antenne de connexion 21 est utilisée pour des signaux de faisceaux formés à bord et des signaux de faisceaux formés au sol. Le satellite 2 comporte dans ce cas un module de combinaison 203, sur le sens descendant de la liaison de connexion, des signaux de faisceaux formés à bord et des signaux de faisceaux formés au sol.

Les figures 2a et 2b représentent de façon très schématique certains éléments du satellite 2, plus particulièrement le dispositif de traitement bord 20, le réseau d'antennes An et l'antenne de connexion, dans le cas d'une formation de faisceaux dans le sens respectivement descendant et montant de la liaison utilisateurs.

Sur les figures 2a et 2b, on considère de manière non limitative, à des fins de clarté des figures :
- un réseau comportant trois antennes A1, A2 et A3,
- la formation d'un faisceau à bord, pour un terminal terrestre T_{A}, et la formation d'un faisceau au sol, pour un terminal terrestre T_{B}.

Sur les figures 2a et 2b, les références S_{A}, S'_{A}, S"_{A} et S"'_{A} désignent des signaux de faisceaux devant être formés à bord du satellite 2, et les références S_{B}, S'_{B}, S"_{B} et S"'_{B} désignent des signaux de faisceaux formés au sol dans la station sol 3. Les coefficients de pondération à appliquer (dans le sens montant et le sens descendant) pour former le faisceau du terminal terrestre T_{A} sont désignés par a₁, a₂ et a₃, et les coefficients de pondération à appliquer pour former le faisceau du terminal terrestre T_{B} sont désignés par b₁, b₂ et b₃.

Dans les exemples décrits, on considère que les différents signaux échangés sur la liaison de connexion sont multiplexés en fréquence, c'est-à-dire échangés sur des sous-bandes différentes. Cet exemple n'est pas limitatif de l'invention : suivant d'autres exemples, lesdits signaux sont multiplexés dans le temps, par étalement au moyen de codes orthogonaux ou pseudo-orthogonaux, etc.

On considère, également de manière non limitative, que les faisceaux sont multiplexés en fréquence sur la liaison utilisateurs, tel qu'indiqué précédemment. On notera qu'une même sous-bande peut toutefois être utilisée pour des faisceaux desservant des zones géographiques différentes, suffisamment éloignées pour que les interférences co-fréquences soient limitées par la formation de faisceaux (multiplexage spatial).

Sur la figure 2a, le satellite reçoit sur son antenne de connexion 21 des signaux, multiplexés en fréquence, correspondant à des faisceaux différents, qui sont dans l'exemple représenté :
- le signal SA, à destination du terminal terrestre T_{A}, sur une sous-bande désignée par f₁,
- les signaux b₁S_{B}, b₂S_{B} et b₃S_{B} à destination du terminal terrestre T_{B}, correspondant aux versions pondérées du signal S_{B}, formées par la station sol 3, sur des sous-bandes désignées respectivement par f₂, f₃ et f₄.

Le module de routage 202 effectue par exemple un démultiplexage, et comporte de préférence des filtres dont les gabarits sont adaptés aux différentes sous-bandes, pour séparer les signaux de faisceaux formés à bord des signaux de faisceaux formés au sol.

Le signal SA est routé vers le module de formation de faisceaux à bord 200, et les signaux b₁S_{B}, b₂S_{B} et b₃S_{B} sont routés vers le module de traitement de faisceaux formés au sol 201. Suivant d'autres exemples, le module de routage 202 peut n'effectuer aucune séparation des signaux, et se contenter de router les signaux reçus sur l'antenne de connexion 21 à la fois vers le module de formation de faisceaux à bord 200, et vers le module de traitement de faisceaux formés au sol 201 (la séparation étant alors effectuée par le module de traitement de faisceaux formés au sol 201 et le module de formation de faisceaux à bord 200).

Le module de formation de faisceaux à bord 200 applique les coefficients de pondération a₁, a₂ et a₃, pour chaque faisceau à former, et peut opérer une translation en fréquence des signaux a₁S_{A}, a₂S_{A} et a₃S_{A}, en vue d'une transmission sur la sous-bande, désignée par f_{A}, attribuée au faisceau à destination du terminal terrestre T_{A}, pour le multiplexage en fréquence des faisceaux.

Le module de traitement de faisceaux formés au sol 201 peut effectuer un démultiplexage des signaux b₁S_{B}, b₂S_{B} et b₃S_{B}, s'ils sont toujours multiplexés. Le module de traitement de faisceaux formés au sol 201 peut également opérer une translation en fréquence desdits signaux b₁S_{B}, b₂S_{B} et b₃S_{B}, en vue d'une transmission sur une même sous-bande, désignée par f_{B}, attribuée au faisceau à destination du terminal terrestre T_{B}, pour le multiplexage en fréquence des faisceaux.

Sur la figure 2a, le satellite 2 comporte un module de combinaison 203 des signaux de faisceaux formés à bord du satellite 2 et des signaux de faisceaux formés au sol, qui opère principalement une sommation des faisceaux multiplexés en fréquence. Les signaux a₁S_{A} et b₁S_{B} sont combinés pour l'antenne A1, les signaux a₂S_{A} et b₂S_{B} sont combinés pour l'antenne A2, et les signaux a₃S_{A} et b₃S_{B} sont combinés pour l'antenne A3.

Sur la figure 2b, on considère que le terminal terrestre T_{A} a émis un signal S_{A} sur une sous-bande f_{A} en direction du satellite 2, et que le terminal terrestre T_{B} a émis un signal S_{B} sur une sous-bande f'_{B} en direction du satellite 2. Les signaux S_{A} et S_{B} sont reçus sur chacune des antennes A1, A2 et A3 du réseau du satellite 2 sous la forme de signaux respectivement S'_{A}, S"_{A} et S"'_{A} pour le signal SA, et S'_{B}, S"_{B} et S"'_{B} pour le signal S_{B}.

Le module de routage 202 effectue par exemple un démultiplexage, et comporte de préférence des filtres dont les gabarits sont adaptés aux différentes sous-bandes pour séparer les signaux de faisceaux formés à bord des signaux de faisceaux formés au sol.

Suivant d'autres exemples, le module de routage 202 n'effectue aucune séparation des signaux, et peut ne consister qu'en un routage des signaux reçus sur chaque antenne A1, A2 et A3 à la fois vers le module de formation de faisceaux à bord 200 et vers le module de traitement de faisceaux formés au sol 201 ; cela peut par exemple être le cas lorsque le multiplexage des signaux SA et S_{B} est essentiellement spatial, la séparation desdits signaux reçus étant obtenue par la formation de faisceaux.

Le module de formation de faisceaux à bord 200 combine linéairement les signaux S'_{A}, S"_{A} et S"'_{A} au moyen des coefficients de pondération a₁, a₂ et a₃, de sorte à obtenir un signal a₁S'_{A}+a₂S"_{A}+a₃S"'_{A}. Ce dernier signal peut être translaté en fréquence, en vue d'une transmission sur une sous-bande f'₁ de la liaison de connexion, pour un multiplexage en fréquences sur la liaison de connexion.

Le module de traitement de faisceaux formés au sol 201 effectue un multiplexage des signaux S'_{B}, S"_{B} et S"'_{B}, qui correspond dans l'exemple illustré à une translation en fréquence desdits signaux S'_{B}, S"_{B} et S"'_{B}, en vue d'une transmission sur les sous-bandes respectivement f₂, f₃ et f'₄, pour un multiplexage en fréquences sur la liaison de connexion.

Sur la figure 2b, le satellite 2 comporte un module de combinaison 203 des signaux de faisceaux formés à bord du satellite 2 et des signaux de faisceaux formés au sol, qui opèrent principalement une sommation, pour l'antenne de connexion 21, du signal a₁S'_{A}+a₂S"_{A}+a₃S"'_{A} et des signaux S'_{B}, S"_{B} et S"'_{B}.

Dans un mode préféré de réalisation du dispositif de traitement bord 20, illustré par la figure 3 dans le cas d'une formation de faisceaux dans le sens montant de la liaison utilisateurs, les opérations, effectuées par les différents modules du dispositif de traitement bord 20, sont effectuées sur des signaux numériques.

Les signaux reçus sur les antennes An du réseau sont par exemple filtrés 22, amplifiés au moyen d'amplificateurs faible bruit 23, ramenés 24 sur une fréquence intermédiaire au moyen de circuits multiplieurs et d'oscillateurs locaux.

Après traitement par le dispositif de traitement bord 20, des signaux analogiques, de préférence sur fréquence intermédiaire, sont par exemple montés 25 en fréquence au moyen d'un circuit multiplieur et d'un oscillateur local, et amplifiés au moyen d'un amplificateur de puissance 26.

Le dispositif de traitement bord 20 comporte de préférence une unité centrale de traitement, par exemple un processeur embarqué dans le satellite 2, reliée notamment à une unité de stockage (disque dur, mémoire RAM et/ou ROM, etc.) et à des moyens d'interfaçage (convertisseurs analogiques/numériques 204 et convertisseur numérique/analogique 205 sur la figure 3) par un ou des bus de communication.

Des codes d'instructions sont mémorisés dans ladite unité de stockage et, lorsqu'ils sont exécutés par l'unité centrale de traitement, celle-ci est adaptée à réaliser les fonctions des différents modules du dispositif de traitement bord 20. Suivant certains modes de réalisation, certaines desdites fonctions sont exécutées par des circuits intégrés spécialisés, de type ASIC, FPGA, etc., pouvant être configurés par l'unité centrale de traitement du dispositif de traitement bord 20.

D'autres architectures sont possibles pour le dispositif de traitement bord 20, et on comprend que le choix d'une architecture particulière ne constitue qu'une variante possible d'implémentation de l'invention.

Notamment, certains modules du dispositif de traitement bord 20, voire tous les modules, peuvent être réalisés en tout ou partie au moyen de composants analogiques. Par exemple, le module de traitement de faisceaux formés au sol 201, le module de routage 202 et, le cas échéant, le ou les modules de combinaison 203, peuvent être constitués de filtres analogiques, de circuits multiplieurs, d'oscillateurs locaux, de coupleurs, etc.

La station sol 3 comporte au moins une antenne de connexion 31 pour échanger des données sur la liaison de connexion, et un dispositif au sol de formation de faisceaux, dit « dispositif de traitement sol » 30.

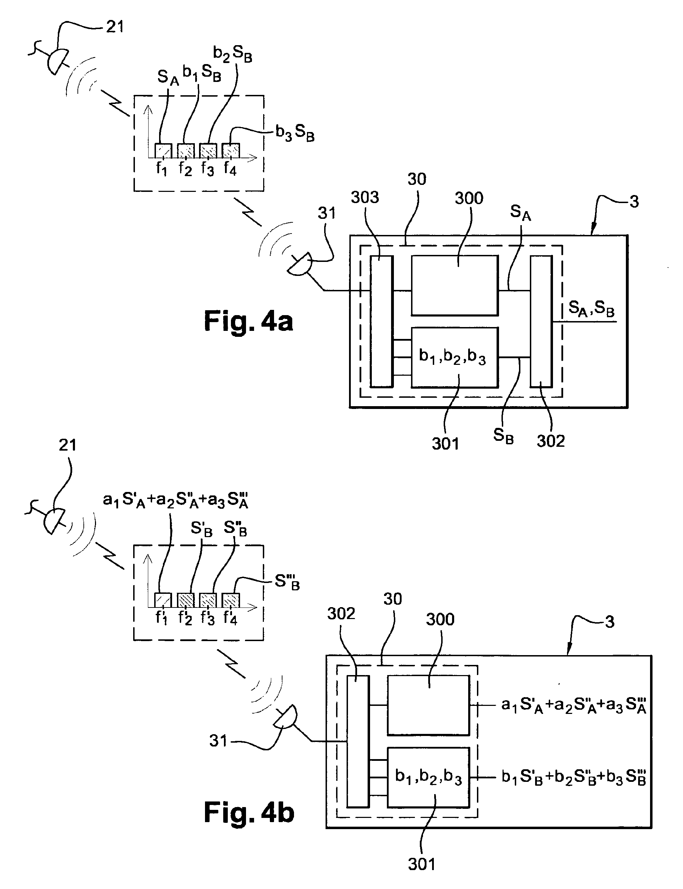

Dans un mode préféré de réalisation, visible sur les figures 4a et 4b, le dispositif de traitement sol 30 comporte :
- un module de formation de faisceaux au sol 301, qui est fonctionnellement associé avec le module de traitement de faisceaux formés au sol 201 du satellite 2,
- un module de traitement de faisceaux formés à bord 300, qui est fonctionnellement associé avec le module de formation de faisceaux à bord 200 du satellite 2,
- un module de routage 302 des signaux à destination du satellite 2 et/ou en provenance dudit satellite, des signaux de faisceaux formés à bord du satellite étant routés vers le module de traitement de faisceaux formés à bord 300, et des signaux de faisceaux formés au sol étant routés vers le module de formation de faisceaux au sol 301.

Dans un mode particulier de réalisation, la même antenne de connexion 31 est utilisée pour des signaux de faisceaux formés à bord et des signaux de faisceaux formés au sol. La station sol 3 comporte dans ce cas un module de combinaison 303, sur le sens montant de la liaison de connexion, des signaux de faisceaux formés à bord et des signaux de faisceaux formés au sol.

Les figures 4a et 4b représentent de façon très schématique certains éléments de la station sol 3, plus particulièrement le dispositif de traitement sol 30 et l'antenne de connexion, dans le cas d'une formation de faisceaux dans le sens respectivement descendant et montant de la liaison utilisateurs.

Les mêmes conventions que pour les figures 2a et 2b sont considérées sur les figures 4a et 4b. La figure 4a illustre, côté station sol 3, les traitements qui précèdent ceux illustrés par la figure 2a, tandis que la figure 4b illustre les traitements qui suivent ceux illustrés par la figure 2b.

Sur la figure 4a, la station sol 3 doit traiter le signal SA, à destination du terminal terrestre T_{A}, et le signal S_{B}, à destination du terminal T_{B}.

Le module de routage 302 route le signal SA vers le module de traitement de faisceaux formés à bord 300, et le signal S_{B} vers le module de formation de faisceaux au sol 301.

Le module de formation de faisceaux au sol 301 applique les coefficients de pondération b₁, b₂ et b₃, et peut opérer une translation en fréquence des signaux b₁S_{B}, b₂S_{B} et b₃S_{B}, en vue d'un multiplexage avec le signal SA et d'une transmission sur les sous-bandes f₂, f₃ et f₄.

Le module de traitement de faisceaux formés à bord 300 opère par exemple une translation en fréquence du signal SA, en vue d'un multiplexage avec les signaux b₁S_{B}, b₂S_{B} et b₃S_{B}, et d'une transmission sur la sous-bande f₁.

Sur la figure 4a, la station sol 3 comporte un module de combinaison 303 des signaux de faisceaux formés à bord du satellite 2 et des signaux de faisceaux formés au sol, qui opèrent principalement une sommation, pour l'antenne de connexion 31, des signaux, multiplexés en fréquence, SA, b₁S_{B}, b₂S_{B} et b₃S_{B}.

Sur la figure 4b, la station sol 3 reçoit sur l'antenne de connexion 31 un signal a₁S'_{A}+a₂S"_{A}+a₃S"'_{A} et les signaux S'_{B}, S"_{B} et S"'_{B}, multiplexés en fréquence et transmis sur des sous-bandes respectivement f'₁, f'₂, f'₃ et f4.

Le signal a₁S'_{A}+a₂S"_{A}+a₃S"'_{A} est routé vers le module de traitement de faisceaux formés à bord 300, et les signaux S'_{B}, S"_{B} et S'"_{B} sont routés vers le module de formation de faisceaux au sol 301.

Le module de formation de faisceaux au sol 301 combine linéairement les signaux S'_{B}, S"_{B} et S"'_{B} au moyen des coefficients de pondération b₁, b₂ et b₃, de sorte à obtenir un signal b₁S'_{B}+b₂S"_{B}+b₃S"'_{B}, de préférence ramené en bande de base.

Le module de traitement de faisceaux formés à bord 300 peut par exemple opérer une translation en fréquence du signal a₁S'_{A}+a₂S"_{A}+a₃S"'_{A}, afin de ramener celui-ci en bande de base.

Comme pour le dispositif de traitement bord 20, le dispositif de traitement sol 30 comporte de préférence une unité centrale de traitement, par exemple un processeur, et une unité de stockage (disque dur, mémoire RAM et/ou ROM, etc.) reliés par un bus de communication. Des codes d'instructions sont mémorisés dans ladite unité de stockage et, lorsqu'ils sont exécutés par le processeur, celui-ci est adapté à réaliser les fonctions des différents modules du dispositif de traitement sol 30. Suivant certains modes de réalisation, certaines desdites fonctions sont exécutées par des circuits intégrés spécialisés, de type ASIC, FPGA, etc., pouvant être configurés par l'unité centrale de traitement du dispositif de traitement sol 30.

Le système 1 de télécommunications comporte également un centre de gestion 4 des faisceaux. Dans l'exemple illustré par la figure 1, le centre de gestion des faisceaux est inclus dans la station sol 3 comprenant le dispositif de traitement sol 30. Suivant d'autres exemples, le centre de gestion 4 des faisceaux peut être inclus dans une autre station sol, distribué entre la station sol 3 et le satellite 2, etc.

Le centre de gestion 4 des faisceaux comporte de préférence une unité centrale de traitement reliée à une unité de stockage, dans laquelle sont mémorisées des codes d'instructions pour la mise en oeuvre des différentes fonctions dudit centre de gestion des faisceaux.

Le centre de gestion 4 des faisceaux a pour rôle de configurer les différents faisceaux à former sur la liaison utilisateurs.

Notamment, le centre de gestion 4 des faisceaux a pour fonction de déterminer le nombre et le type de faisceaux à former, d'après un contexte utilisateurs.

Le contexte utilisateurs est une liste de paramètres associés à chaque terminal terrestre, ou groupe de terminaux terrestres. Différents types de paramètres peuvent être pris en compte dans le contexte utilisateur ; on peut citer, à titre d'exemples non limitatifs, les paramètres suivants :
- la localisation : par exemple un identifiant d'une zone géographique dans le cas d'un découpage statique, des coordonnées GPS, etc.,
- le rapport C/(N+I) (signal sur bruit plus interférences) estimé,
- la puissance d'émission,
- le type de terminal terrestre : par exemple le débit de données maximum supporté dans le sens descendant et/ou descendant, les services auquels le propriétaire du terminal terrestre a souscrit,
- les caractéristiques radiofréquences du terminal terrestre : par exemple la puissance isotrope rayonnée équivalente (désignée par l'acronyme « PIRE » ou « EIRP » dans la littérature anglo-saxonne, pour « Equivalent Isotropically Radiated Power »), le facteur de bruit de l'étage radiofréquences, le gain de l'antenne du terminal terrestre, etc.
- le débit de données en cours, et/ou le débit de données demandé,
- la vitesse de déplacement.

En fonction du contexte utilisateurs, le centre de gestion 4 des faisceaux détermine le nombre et le type de faisceaux à former, les faisceaux à former étant répartis en au moins deux groupes de faisceaux : un premier groupe de faisceaux formés à bord du satellite 2, et un groupe de faisceaux formés au sol, par la station sol 3. Le centre de gestion 4 des faisceaux configure le dispositif de traitement bord 20 et le dispositif de traitement sol 30 afin que ceux-ci soient aptes à former les faisceaux respectivement formés à bord du satellite 2 et au sol.

Les faisceaux formés à bord du satellite 2 sont de préférence des faisceaux sensiblement statiques, c'est-à-dire desservant des zones géographiques à la surface de la Terre dont le découpage évolue peu dans le temps. Les coefficients de pondération pour la formation desdits faisceaux statiques varient peu au cours du temps ; on notera toutefois qu'ils peuvent être modifiés pour tenir compte notamment d'écarts estimés de position et d'attitude du satellite 2. De préférence, un faisceau statique est attribué par défaut à un terminal terrestre ou un groupe de terminaux terrestres.

Les faisceaux formées au sol, par la station sol 3, sont de préférence des faisceaux dynamiques, adaptés au contexte de terminaux terrestres T, ou de groupes de terminaux terrestres T, pouvant mettre en oeuvre des procédés de traitement du signal avancés. Les coefficients de pondération sont calculés au sol, par le centre de gestion 4 des faisceaux et/ou par le dispositif de traitement sol 30 de la station sol 3, en fonction du contexte utilisateurs du faisceau dynamique à former.

Par exemple, dans le cas d'un terminal terrestre T immobile et échangeant des données avec le satellite 2 avec un débit de données faible, le centre de gestion 4 des faisceaux attribue à ce terminal terrestre T un faisceau statique, éventuellement partagé avec d'autres terminaux terrestres, qui sera formé à bord du satellite 2.

Suivant un autre exemple, dans le cas d'un terminal terrestre T immobile et désirant échanger des données avec le satellite 2 avec un débit de données élevé, le centre de gestion 4 des faisceaux peut attribuer à ce terminal terrestre T un faisceau dynamique, éventuellement partagé avec d'autres terminaux terrestres, qui sera formé au sol.

Ce sera le cas si le rapport C/(N+I) estimé s'avère insuffisant pour l'échange de données avec le débit souhaité, et si la mise en oeuvre de procédés de traitement du signal avancés peut permettre d'améliorer le rapport C/(N+I). Il est notamment possible de calculer des coefficients de pondération (en particulier pour une formation de faisceaux dans le sens montant de la liaison utilisateurs) permettant d'annuler en tout ou partie des interférences provenant d'une direction donnée différente de la direction du terminal terrestre pour lequel on cherche à améliorer le rapport C/(N+I).

Suivant encore un autre exemple, le centre de gestion 4 des faisceaux peut attribuer un faisceau dynamique à un terminal terrestre si un rapport C/(N+I) donné ne peut pas être atteint avec un faisceau statique, compte tenu des caractéristiques radiofréquences dudit terminal terrestre (par exemple du fait d'un facteur de bruit supérieur à ceux des autres terminaux terrestres, etc).

Suivant encore un autre exemple, si la localisation d'un terminal terrestre est telle que son rapport C/(N+I) est bas, notamment en limite de couverture d'un faisceau statique, ledit terminal terrestre pourra se voir attribuer un faisceau dynamique, afin d'améliorer ledit rapport C/(N+I).

Suivant encore un autre exemple, dans le cas d'un terminal terrestre T mobile avec une vitesse importante, par exemple dans le cas d'un terminal terrestre T dans un train ou un aéronef (avion, hélicoptère, etc.), le centre de gestion 4 des faisceaux peut attribuer à ce terminal terrestre T un faisceau dynamique, qui va suivre ledit terminal terrestre dans son déplacement, dans la mesure où l'attribution d'un faisceau statique conduirait à basculer régulièrement ledit terminal terrestre d'un faisceau statique à un autre. L'attribution d'un faisceau dynamique est particulièrement avantageuse si ledit terminal terrestre est un point relais permettant de relayer au sol des données vers un nombre important d'autres terminaux terrestres. Les coefficients de pondération sont dans ce cas calculés de sorte à maximiser le diagramme de rayonnement du réseau d'antennes An dans la direction dudit terminal terrestre mobile.

Suivant encore un autre exemple, des faisceaux dynamiques sont d'abord attribués à des terminaux terrestres T prioritaires, c'est-à-dire pour des terminaux terrestres T dont les données sont critiques (terminaux terrestres d'ambulanciers, de policiers, de pompiers, de secouristes, etc.), et/ou des terminaux terrestres T ayant souscrit un abonnement visant à leur assurer une qualité de service améliorée.

Du fait de la capacité à former des faisceaux au sol ou à bord du satellite 2, et du fait de l'utilisation du contexte utilisateurs pour déterminer le nombre de faisceaux à former et pour répartir lesdits faisceaux parmi deux groupes, l'un de faisceaux formés au sol, l'autre de faisceaux formés à bord du satellite 2, la formation de faisceaux sur la liaison utilisateurs est optimisée.

Ainsi, les faisceaux formés sont, par défaut, statiques ou semi-statiques, formés à bord du satellite 2. Si un terminal terrestre T ou un groupe de terminaux terrestres nécessite une qualité de service améliorée, ne pouvant pas lui être fournie d'après le contexte utilisateurs par un faisceau statique, un faisceau dynamique, formé au sol, est attribué. Sur la figure 1, des zones géographiques desservies par des faisceaux formés à bord sont désignées par la référence 50, tandis que des zones géographiques desservies par des faisceaux formés au sol sont désignées par la référence 51.

On comprend que les performances sur la liaison utilisateurs sont nettement améliorées, notamment par la possibilité de mettre en oeuvre des algorithmes de traitement du signal avancés, tandis que l'impact sur la bande passante nécessaire sur la liaison de connexion est limité par le fait que seuls certains des terminaux terrestres ou groupes de terminaux terrestres particuliers se voient attribuer des faisceaux formés au sol.

De préférence, le centre de gestion 4 des faisceaux coordonne la coexistence des faisceaux statiques et dynamiques.

En particulier, ledit centre de gestion de faisceaux attribue de préférence les sous-bandes aux différents faisceaux de sorte à réduire les interférences, notamment co-fréquences, liées à la coexistence spectrale desdits faisceaux statiques et dynamiques.

Une façon simple de coordonner ladite coexistence spectrale consiste à former deux groupes de sous-bandes : un premier groupe de sous-bandes pour les faisceaux statiques, et un second groupe de sous-bandes pour les faisceaux dynamiques. Toutefois, d'autres façons de coordonner la coexistence spectrale des faisceaux statiques et dynamiques peuvent être mises en oeuvre dans l'invention.

De préférence, le centre de gestion 4 des faisceaux coordonne, en particulier dans le sens descendant de la liaison utilisateurs, la coexistence d'un point de vue répartition de la puissance radiofréquence disponible à bord du satellite 2. En effet, ladite puissance radiofréquence disponible étant limitée, celle-ci doit être répartie entre les différents faisceaux, de préférence en assurant un rapport C/(N+I) minimal sur chacun desdits faisceaux.

La coordination des faisceaux statiques et dynamiques peut mettre en oeuvre tout procédé de gestion des ressources connu de l'homme de l'art.

La présente invention concerne également un procédé de formation de faisceaux.

Tel que décrit précédemment, le procédé de formation de faisceaux comporte une étape de répartition des terminaux terrestres ou groupe de terminaux terrestres entre les deux groupes de faisceaux, c'est-à-dire le groupe de faisceaux formés à bord du satellite et le groupe de faisceaux formés au sol.

De préférence, mais non limitativement, la répartition des terminaux terrestres ou groupes de terminaux terrestres tient compte du contexte utilisateurs, tel que décrit précédemment.

Le procédé comporte des étapes de :
- formation de faisceaux au sol, exécutée principalement par le module de formation de faisceaux au sol 301 de la station sol 3,
- formation de faisceaux à bord, exécutée principalement par le module de formation de faisceaux à bord 200 du satellite 2.

Les étapes de formation de faisceaux au sol et de formation de faisceaux à bord sont exécutées en parallèle, et mettent en oeuvre à la fois le dispositif de traitement bord 20 et le dispositif de traitement sol 30.

L'étape de formation de faisceaux au sol comporte notamment une sous-étape de calcul des coefficients de pondération, pour la formation de faisceaux adaptés au contexte utilisateurs. Lesdits coefficients de pondération sont calculés par le centre de gestion de faisceaux et/ou par le dispositif de traitement sol.

Les faisceaux formés à bord sont de préférence des faisceaux statiques ou semi-statiques, de sorte que la mise à jour des coefficients de pondération de faisceaux est donc moins fréquente que celle des coefficients de faisceaux formés au sol.

La répartition des faisceaux parmi les deux groupes est par exemple mise à jour périodiquement, ou dès qu'un changement de contexte, susceptible d'entraîner une modification de la répartition, est détecté.

Les faisceaux statiques, formés à bord, sont par exemple attribués par défaut aux terminaux terrestres ou groupes de terminaux terrestres. Les faisceaux dynamiques, formés au sol, sont de préférence attribués si, d'après le contexte utilisateurs, différents critères sont vérifiés, par exemple :
- un critère de mobilité du terminal terrestre ou du groupe de terminaux terrestres : par exemple un faisceau dynamique est attribué si la vitesse estimée est supérieure à une vitesse seuil,
- un critère de débit de données : par exemple un faisceau dynamique est attribué si le débit de données nécessite la mise en oeuvre d'algorithmes de traitement du signal avancés (annulation d'interférences, etc.),
- un critère de caractéristiques radiofréquences : par exemple un faisceau dynamique est attribué à un terminal terrestre si ses caractéristiques radiofréquences indiquent des performances moins bonnes que celles des autres terminaux terrestres,
- un critère de localisation : par exemple un faisceau dynamique est attribué si un terminal terrestre se trouve en limite de couverture d'un faisceau statique.

De préférence, la proportion de faisceaux appartenant à chaque groupe est variable, afin de permettre de s'adapter au mieux au contexte utilisateurs. Suivant d'autres exemples, la proportion de faisceaux est fixe, de sorte qu'un même nombre de faisceaux est toujours formé au sol.

On comprend que, suivant le contexte utilisateurs, il est possible que, à un instant donné, le système 1 de télécommunications forme des faisceaux exclusivement au sol ou exclusivement à bord.

De plus, suivant un mode particulier de mise en oeuvre, le système 1 peut basculer tous les faisceaux sur une formation à bord du satellite, indépendamment du contexte utilisateurs. Ce mode s'avère particulièrement avantageux, en particulier dans le cas où ledit système détecte de fortes perturbations sur le lien de connexion, perturbations qui pourraient conduire à une forte dégradation de la qualité des faisceaux formés au sol.

On comprend que l'invention est particulièrement avantageuse du fait qu'elle permet de bénéficier des avantages de la formation de faisceaux à bord et de la formation de faisceaux au sol, tout en limitant la bande passante nécessaire sur la liaison de connexion, qui peut être adaptée au contexte utilisateurs.

## Revendications

1. Dispositif (20) destiné à être embarqué dans un satellite (2) de télécommunications multifaisceaux adapté à relayer des données entre des terminaux terrestres (T) et au moins une station sol (3), lesdites données étant échangées sur une liaison radiofréquences, dite « liaison utilisateurs », entre le satellite (2) et des terminaux terrestres (T) en formant des faisceaux dans un sens descendant et/ou un sens montant de ladite liaison utilisateurs, ledit dispositif comportant un module de formation de faisceaux (200) à bord dudit satellite, et étant **caractérisé en ce qu'**il comporte un module de traitement de faisceaux formés au sol (201) par la station sol (3), et un module de routage (202) des signaux reçus de la station sol (3) et/ou de terminaux terrestres (T); des signaux de faisceaux formés à bord étant routés vers le module de formation de faisceaux à bord (200), et des signaux de faisceaux formés au sol étant routés vers le module de traitement de faisceaux formés au sol (201).

2. Dispositif (20) selon la revendication 1, comportant, pour la formation de faisceaux dans le sens descendant de la liaison utilisateurs, un module de combinaison (203) des signaux de faisceaux formés à bord et des signaux de faisceaux formés au sol.

3. Satellite (2) destiné à être placé en orbite terrestre, **caractérisé en ce qu'**il comporte un dispositif (20) selon l'une des revendications 1 à 2.

4. Satellite (2) selon la revendication 3, comportant un réseau d'antennes (An) pour échanger des données sur la liaison utilisateurs, ledit réseau d'antennes étant utilisé à la fois pour les faisceaux formés à bord et pour les faisceaux formés au sol.

5. Centre de gestion (4) de système (1) de télécommunications par satellite multifaisceaux, système dans lequel des données sont échangées entre des terminaux terrestres (T) et au moins une station sol (3) par l'intermédiaire d'au moins un satellite (2) multifaisceaux, lesdites données étant échangées sur une liaison radiofréquences, dite « liaison utilisateurs », entre le satellite (2) et des terminaux terrestres (T) en formant des faisceaux dans un sens descendant et/ou un sens montant de ladite liaison utilisateurs, **caractérisé en ce qu'**il comporte des moyens de répartir les faisceaux à former parmi deux groupes de faisceaux : un groupe de faisceaux formés au sol par la station sol (3) et un groupe de faisceaux formés à bord du satellite (2).

6. Centre de gestion (4) selon la revendication 5, dans lequel les moyens de répartir les faisceaux sont configurés pour répartir les faisceaux à former parmi les deux groupes de faisceaux en fonction d'un contexte utilisateurs des terminaux terrestres.

7. Centre de gestion (4) selon la revendication 6, dans lequel les moyens de répartir les faisceaux sont configurés pour répartir les faisceaux en fonction d'au moins un critère parmi les critères suivants :
- un critère de mobilité d'un terminal terrestre ou d'un groupe de terminaux terrestres pour lequel un faisceau doit être formé,
- un critère de débit de données d'un terminal terrestre ou d'un groupe de terminaux terrestres pour lequel un faisceau doit être formé,
- un critère de localisation d'un terminal terrestre ou d'un groupe de terminaux terrestres pour lequel un faisceau doit être formé,
- un critère de caractéristiques radiofréquences d'un terminal terrestre ou d'un groupe de terminaux terrestres pour lequel un faisceau doit être formé.

8. Centre de gestion (4) selon l'une des revendications 5 à 7, comportant des moyens de coordonner la coexistence des faisceaux formés à bord et des faisceaux formés au sol.

9. Système (1) de télécommunications comportant au moins un satellite (2) multifaisceaux selon l'une des revendications 3 à 4, au moins une station sol (3) comportant un module de formation de faisceaux au sol (301), et un centre de gestion (4) selon l'une des revendications 5 à 8.

10. Système (1) selon la revendication 9, dans lequel la station sol (3) comporte un module de traitement de faisceaux formés à bord (300) du satellite (2) et un module de routage (302) des signaux à destination et/ou reçus du satellite (2), des signaux de faisceaux formés à bord du satellite étant routés vers le module de traitement de faisceaux formés à bord (300), et des signaux de faisceaux formés au sol étant routés vers le module de formation de faisceaux au sol (301).

11. Procédé de formation de faisceaux sur une liaison radiofréquences, dite
« liaison utilisateurs », entre un satellite (2) multifaisceaux et des terminaux terrestres (T), des données étant échangées par l'intermédiaire du satellite (2) entre lesdits terminaux terrestres et au moins une station sol (3), **caractérisé en ce qu'**il comporte une étape de répartition des faisceaux à former parmi deux groupes de faisceaux, un groupe de faisceaux formés à bord du satellite (2) et un groupe de faisceaux formés au sol par la station sol (3), et comportant une étape de formation à bord des faisceaux du groupe de faisceaux formés à bord du satellite (2), et une étape de formation au sol des faisceaux du groupe de faisceaux formés par la station sol (3).

12. Procédé selon la revendication 11, dans lequel les faisceaux à former sont répartis parmi les deux groupes de faisceaux en fonction d'un contexte utilisateurs des terminaux terrestres (T).

13. Procédé selon la revendication 12, dans lequel les faisceaux formés à bord du satellite (2) sont des faisceaux statiques ou semi-statiques, et les faisceaux formés au sol sont des faisceaux dynamiques.

14. Procédé selon la revendication 12 ou 13, dans lequel on répartit les faisceaux en fonction d'au moins un critère parmi les critères suivants :
- un critère de mobilité d'un terminal terrestre ou d'un groupe de terminaux terrestres pour lequel un faisceau doit être formé,
- un critère de débit de données d'un terminal terrestre ou d'un groupe de terminaux terrestres pour lequel un faisceau doit être formé,
- un critère de localisation d'un terminal terrestre ou d'un groupe de terminaux terrestres pour lequel un faisceau doit être formé,
- un critère de caractéristiques radiofréquences d'un terminal terrestre ou d'un groupe de terminaux terrestres pour lequel un faisceau doit être formé.

15. Procédé selon l'une des revendications 11 à 14, dans lequel tous les faisceaux sont formés à bord lorsqu'une liaison de connexion, entre le satellite et la station sol, présente des perturbations importantes.

## Claims

1. A device (20) intended to be placed on-board a multi-beam telecommunications satellite (2) adapted to relay data between terrestrial terminals (T) and at least one ground station (3), said data being exchanged on a radiofrequency link, referred to as a "user link", between the satellite (2) and terrestrial terminals (T) by forming beams in a down-path and/or up-path of said user link, said device comprising a module (200) for forming beams on-board the satellite, and being **characterised in that** it comprises a module (201) for processing beams ground-formed in the ground station (3), and a module (202) for routing signals received from the ground station (3) and/or from terrestrial terminals (T), signals of beams formed on-board being routed towards the on-board beams forming module (200), and signals of ground-formed beams being routed towards the ground-formed beams processing module (201).

2. A device (20) according to claim 1, comprising, for forming beams in the down-path of the user link, a module (203) for combining signals of on-board-formed beams and signals of ground-formed beams.

3. A satellite (2) intended to be placed in orbit around the Earth, **characterised in that** it comprises a device (20) according to one of claims 1 to 2.

4. A satellite (2) according to claim 3, comprising an array of antennas (An) for exchanging data on the user link, said array of antennas being used both for the on-board-formed beams and for the ground-formed beams.

5. A management centre (4) for a multi-beam satellite telecommunications system (1), in which system data is exchanged between terrestrial terminals (T) and at least one ground station (3) via at least one multi-beam satellite (2), said data being exchanged on a radiofrequency link, referred to as a "user link", between the satellite (2) and terrestrial terminals (T) by forming beams in a down-path and/or an up-path of said user link, **characterised in that** it comprises means for dividing the beams to be formed into two groups of beams: one group of beams formed on the ground by the ground station (3) and one group of beams formed on-board the satellite (2).

6. A management centre (4) according to claim 5, wherein the means for dividing the beams are configured to divide the beams into the two groups of beams according to a user context of the terrestrial terminals.

7. A management centre (4) according to claim 6, wherein the means for dividing the beams are configured to divide the beams according to at least one criterion among the following criteria:
- a criterion related to the mobility of a terrestrial terminal or group of terrestrial terminals for which a beam is to be formed,
- a criterion related to the data rate of a terrestrial terminal or group of terrestrial terminals for which a beam is to be formed,
- a criterion related to the localisation of a terrestrial terminal or group of terrestrial terminals for which a beam is to be formed,
- a criterion related to the radiofrequency characteristics of a terrestrial terminal or group of terrestrial terminals for which a beam is to be formed.

8. A management centre (4) according to one of claims 5 to 7, comprising means for coordinating the co-existence of on-board-formed beams and ground-formed beams.

9. A telecommunications system (1) comprising at least one multi-beam satellite (2), according to one of claims 3 to 4, at least one ground station (3) comprising a module (301) for ground-forming beams and a management centre (4) according to one of claims 5 to 8.

10. A system (1) according to claim 9, wherein the ground station (3) comprises a module (300) for processing beams formed on-board the satellite (2) and a module (302) for routing signals towards/from the satellite (2), signals of beams formed on-board the satellite being routed towards the on-board-formed beams processing module (300), and signals of ground-formed beams being routed towards the module (301) for ground-forming beams.

11. A method for forming beams on a radiofrequency link, referred to as a "user link" between a multi-beam satellite (2) and terrestrial terminals (T), data being exchanged via the satellite (2) between said terrestrial terminals and at least one ground station (3), **characterised in that** it comprises a step of dividing beams to be formed into two groups of beams, one group of beams formed on-board the satellite (2) and one group of beams formed on the ground by the ground station (3), and comprising a step of on-board forming beams of the group of beams formed on-board the satellite (2), and a step of ground-forming the beams of the group of beams formed on the ground by the ground station (3).

12. A method according to claim 11, wherein the beams to be formed are divided into two groups of beams according to a user context of terrestrial terminals (T).

13. A method according to claim 12, wherein the beams formed on-board the satellite (2) are static or semi-static beams, and the ground-formed beams are dynamic beams.

14. A method according to claim 12 or 13, wherein the beams are divided according to at least one criterion among the following criteria:
- a criterion related to the mobility of a terrestrial terminal or group of terrestrial terminals for which a beam is to be formed,
- a criterion related to the data rate of a terrestrial terminal or group of terrestrial terminals for which a beam is to be formed,
- a criterion related to the localisation of a terrestrial terminal or group of terrestrial terminals for which a beam is to be formed,
- a criterion related to the radiofrequency characteristics of a terrestrial terminal or group of terrestrial terminals for which a beam is to be formed.

15. A method according to one of claims 11 to 14, wherein all the beams are formed on-board when a connection link, between the satellite and the ground station, is subject to high levels of disturbance.

## Patentansprüche

1. Vorrichtung (20), die dazu bestimmt ist, in einen Mehrfachstrahl-Telekommunikations-Satelliten (2) integriert zu werden, der geeignet ist, Daten zwischen terrestrischen Terminals (T) und zumindest einer Bodenstation (3) zu übertragen, wobei die besagten Daten zwischen dem Satelliten (2) und den terrestrischen Terminals (T) über eine Funkfrequenzverbindung, die "Anwenderverbindung" genannt wird, durch die Bildung von Strahlen in eine absteigende Richtung und/ oder eine aufsteigende Richtung der besagten Anwenderverbindung ausgetauscht werden, und die besagte Vorrichtung ein Modul zur Bildung von Strahlen (200) an Bord des besagten Satelliten umfasst, und **dadurch gekennzeichnet ist, dass** sie ein Modul zur Bearbeitung von auf dem Boden (201) durch die Bodenstation (3) gebildeten Strahlen umfasst, und ein Modul zum Routen (202) der Signale, die von der Bodenstation (3) und/ oder den terrestrischen Terminals (T) empfangen werden, wobei Strahlensignale, die an Bord gebildet werden, zum Modul zur Bildung von Strahlen (200) an Bord weitergeleitet werden, und am Boden gebildete Strahlensignale zum Modul zur Bearbeitung der auf dem Boden (201) gebildeten Signale weitergeleitet werden.

2. Vorrichtung (20) nach Anspruch 1, umfassend ein Modul zum Kombinieren (203) der an Bord gebildeten Strahlensignale und der am Boden gebildeten Strahlensignale zur Bildung von Strahlen in die absteigende Richtung der Anwenderverbindung.

3. Satellit (2), der dazu bestimmt ist, in die Erdumlaufbahn gestellt zu werden, **dadurch gekennzeichnet, dass** er eine Vorrichtung (20) nach einem der Ansprüche 1 bis 2 umfasst.

4. Satellit (2) nach Anspruch 3, umfassend ein Antennennetz (An) zum Austausch von Daten über die Anwenderverbindung, wobei das besagte Antennennetz sowohl für die an Bord gebildeten Strahlen, als auch für die am Boden gebildeten Strahlen verwendet wird.

5. Zentrum zur Verwaltung (4) eines Systems (1) für Mehrfachstrahl-Satelliten-Telekommunikation, ein System, bei dem über zumindest einen Mehrfachstrahl-Satelliten (2) Daten zwischen terrestrischen Terminals (T) und zumindest einer Bodenstation (3) ausgetauscht werden, und die besagten Daten zwischen dem Satelliten (2) und den terrestrischen Terminals (T) über eine Funkfrequenzverbindung, die "Anwenderverbindung" genannt wird, durch die Bildung von Strahlen in eine absteigende Richtung und/ oder eine aufsteigende Richtung der besagten Anwenderverbindung ausgetauscht werden, **dadurch gekennzeichnet, dass** es Vorrichtungen zur Aufteilung der zu bildenden Strahlen in zwei Strahlengruppen umfasst: eine Gruppe mit Strahlen, die am Boden durch die Bodenstation (3) gebildet werden, und eine Gruppe mit Strahlen, die an Bord des Satelliten (2) gebildet werden.

6. Verwaltungszentrum (4) nach Anspruch 5, bei dem die Vorrichtungen zur Aufteilung der Strahlen konfiguriert werden, um die zu bildenden Strahlen je nach Anwenderkontext der terrestrischen Terminals auf die beiden Strahlengruppen aufzuteilen.

7. Verwaltungszentrum (4) nach Anspruch 6, bei dem die Vorrichtungen zur Aufteilung der Strahlen konfiguriert werden, um die Strahlen je nach zumindest einem der folgenden Kriterien aufzuteilen:
- ein Kriterium der Mobilität eines terrestrischen Terminals oder einer Gruppe an terrestrischen Terminals, für die ein Strahl gebildet werden soll,
- ein Kriterium der Datenübertragungsrate eines terrestrischen Terminals oder einer Gruppe an terrestrischen Terminals, für die ein Strahl gebildet werden soll,
- ein Kriterium der Lokalisierung eines terrestrischen Terminals oder einer Gruppe an terrestrischen Terminals, für die ein Strahl gebildet werden soll,
- ein Kriterium der Funkfrequenzmerkmale eines terrestrischen Terminals oder einer Gruppe an terrestrischen Terminals, für die ein Strahl gebildet werden soll.

8. Verwaltungszentrum (4) nach einem der Ansprüche 5 bis 7, umfassend Vorrichtungen zum Koordinieren der Koexistenz der an Bord und der am Boden gebildeten Strahlen.

9. Telekommunikationssystem (1) umfassend zumindest einen Mehrfachstrahl-Satelliten (2) nach einem der Ansprüche 3 bis 4, zumindest eine Bodenstation (3) umfassend ein Modul zur Bildung von Strahlen am Boden (301), und ein Verwaltungszentrum (4) nach einem der Ansprüche 5 bis 8.

10. System (1) nach Anspruch 9, bei dem die Bodenstation (3) ein Modul zur Bearbeitung der an Bord (300) des Satelliten (2) gebildeten Strahlen umfasst, und ein Modul zum Routen (302) der Signale zum und/ oder vom Satelliten (2), wobei an Bord des Satelliten gebildete Strahlensignale zum Modul zur Bearbeitung der an Bord (300) gebildeten Strahlen weitergeleitet werden, und am Boden gebildete Strahlensignale zum Modul zur Bildung von Strahlen am Boden (301) weitergeleitet werden.

11. Verfahren zur Bildung von Strahlen über eine Funkfrequenzverbindung, die "Anwenderverbindung" genannt wird, zwischen einem Mehrfachstrahl-Satelliten (2) und terrestrischen Terminals (T), wobei die Daten über den Satelliten (2) zwischen den besagten terrestrischen Terminals und zumindest einer Bodenstation (3) ausgetauscht werden, **dadurch gekennzeichnet, dass** es einen Schritt zur Aufteilung der zu bildenden Strahlen in zwei Strahlengruppen umfasst, eine Gruppe an Strahlen, die an Bord des Satelliten (2) gebildet werden und eine Gruppe an Strahlen, die am Boden durch die Bodenstation (3) gebildet werden, und dass es einen Schritt zur Bildung an Bord der Strahlen der Strahlengruppe umfasst, die an Bord des Satelliten (2) gebildet werden, und einen Schritt zur Bildung am Boden der Strahlen der Strahlengruppe, die durch die Bodenstation (3) gebildet werden.

12. Verfahren nach Anspruch 11, bei dem die zu bildenden Strahlen je nach Anwenderkontext der terrestrischen Terminals (T) unter den beiden Strahlengruppen aufgeteilt werden.

13. Verfahren nach Anspruch 12, bei dem die an Bord des Satelliten (2) gebildeten Strahlen statische oder halbstatische Strahlen sind, und die am Boden gebildeten Strahlen dynamische Strahlen sind.

14. Verfahren nach Anspruch 12 oder 13, bei dem die Strahlen je nach zumindest einem der folgenden Kriterien aufgeteilt werden:
- ein Kriterium der Mobilität eines terrestrischen Terminals oder einer Gruppe an terrestrischen Terminals, für die ein Strahl gebildet werden soll,
- ein Kriterium der Datenübertragungsrate eines terrestrischen Terminals oder einer Gruppe an terrestrischen Terminals, für die ein Strahl gebildet werden soll,
- ein Kriterium der Lokalisierung eines terrestrischen Terminals oder einer Gruppe an terrestrischen Terminals, für die ein Strahl gebildet werden soll,
- ein Kriterium der Funkfrequenzmerkmale eines terrestrischen Terminals oder einer Gruppe an terrestrischen Terminals, für die ein Strahl gebildet werden soll.

15. Verfahren nach einem der Ansprüche 11 bis 14, bei dem alle Strahlen an Bord gebildet werden, wenn eine Schaltungsverbindung zwischen dem Satelliten und der Bodenstation starke Störungen aufweist.
